# EUROPÄISCHE PATENTANMELDUNG

(11) **EP 1 312 520 A2**
(43) Veröffentlichungstag der Anmeldung: **21.05.2003**
(21) Anmeldenummer: 02025084.1
(22) Anmeldetag: 12.11.2002
(51) Int. Cl.: B60R 25/10

(54) **Diebstahlalarmeinrichtung und Verfahren hierzu**

(30) Priorität: 16.11.2001 DE 10156425
(71) Anmelder: Delphi Technologies, Inc., Troy, MI 48007 (US)
(72) Erfinder: Freese, Wolfgang J.F., 51789 Lindlar (DE); Bunse, Rainer, 51597 Morsbach (DE)
(74) Vertreter: Manitz, Finsterwald & Partner GbR

(57) **Zusammenfassung**

Die Erfindung betrifft ein Verfahren und eine Diebstahlalarmeinrichtung zur Detektion eines unerlaubten Anhebens eines Kraftfahrzeugs. Mittels einer Neigungsmesseinrichtung wird ein auf eine vorbestimmte Fahrzeugebene bezogener Ebenenneigungswinkel des Fahrzeugs ermittelt. Dieser Ebenenneigungswinkel wird mittels einer Vergleichseinrichtung mit einem Schwellenwert verglichen, um bei einem Überschreiten dieses Schwellenwerts ein Überschreitungssignal auszulösen.

## Beschreibung

Die Erfindung betrifft ein Verfahren zur Detektion eines unerlaubten Anhebens eines Kraftfahrzeugs, bei dem wenigstens ein Neigungswinkel des Fahrzeugs ermittelt wird und der ermittelte Neigungswinkel mit einem Schwellenwert verglichen wird, um bei einem Überschreiten des Schwellenwerts ein Überschreitungssignal auszulösen. Die Erfindung betrifft ferner eine entsprechende Diebstahlalarmeinrichtung, wenigstens mit einer Neigungsmesseinrichtung zum Ermitteln eines Neigungswinkels des Fahrzeugs und einer Vergleichseinrichtung zum Vergleichen des ermittelten Neigungswinkels mit einem Schwellenwert.

Ein derartiges Verfahren und eine derartige Einrichtung sollen es ermöglichen, ein Alarmsignal auszulösen, falls das Fahrzeug angehoben wird, um unerlaubt ein Rad oder sogar das gesamte Fahrzeug zu entfernen. Zu diesem Zweck ist es bekannt, zwei statische Beschleunigungssensoren einzusetzen, wobei der eine Beschleunigungssensor einen Achsenneigungswinkel des Fahrzeugs zwischen der Vertikalen einerseits und der - im Normalzustand horizontalen - Geradeaus-Fahrtrichtung des Fahrzeugs andererseits ermittelt. Der andere Beschleunigungssensor bestimmt einen Achsenneigungswinkel zwischen der Vertikalen einerseits und einer Referenzachse des Fahrzeugs andererseits, die senkrecht zu der Geradeaus-Fahrtrichtung und im Normalzustand des Fahrzeugs in horizontaler Richtung verläuft. Diese beiden ermittelten Werte der Achsenneigungswinkel werden jeweils mit einem Schwellenwert verglichen. Falls einer der ermittelten Achsenneigungswinkel den zugeordneten Schwellenwert überschreitet, wird das Überschreitungssignal erzeugt. Dieses Signal dient als Alarmsignal oder löst einen weiteren Diebstahlalarm aus.

Das bekannte Detektionsverfahren und die bekannte Diebstahlalarmeinrichtung arbeiten nicht in allen Fällen mit der erwünschten Zuverlässigkeit. Es ist daher eine Aufgabe, die Detektionssicherheit noch weiter zu erhöhen.

Diese Aufgabe wird für ein Verfahren der eingangs genannten Art dadurch gelöst, dass ein auf eine vorbestimmte Fahrzeugebene bezogener Ebenenneigungswinkel des Fahrzeugs ermittelt wird, und dass der Ebenenneigungswinkel mit dem Schwellenwert verglichen wird.

Die Aufgabe wird für eine Diebstahlalarmeinrichtung der eingangs genannten Art dadurch gelöst, dass durch die Neigungsmesseinrichtung ein auf eine vorbestimmte Fahrzeugebene bezogener Ebenenneigungswinkel des Fahrzeugs ermittelbar ist, und dass die Vergleichseinrichtung zum Vergleichen des Ebenenneigungswinkels mit dem Schwellenwert ausgebildet ist.

Bei der Erfindung wird also ein einziger Neigungswinkel mit einem Schwellenwert verglichen, nämlich ein Ebenenneigungswinkel, der die Neigung bzw. eine Änderung der Neigung einer vorbestimmten Fahrzeugebene angibt. Die Erfindung unterscheidet sich somit von bekannten Detektionsverfahren und -einrichtungen dadurch, dass nicht ein oder mehrere Achsenneigungswinkel, die lediglich auf eine Referenzachse des Fahrzeugs bezogen sind, jeweils separat mit einem Schwellenwert verglichen werden. Stattdessen erfolgt ein Vergleich bezüglich einer Fahrzeugebene.

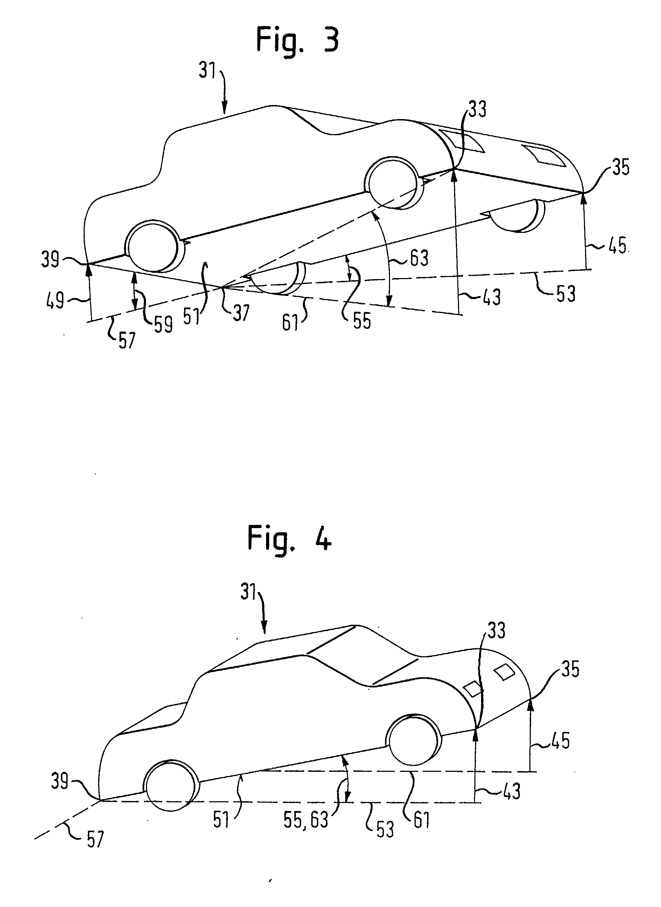

Die Erfindung bietet den Vorteil, dass auch solche unerlaubten Fahrzeugbewegungen zuverlässig detektiert werden können, die nicht genau parallel zu einer vorbestimmten Referenzachse des Fahrzeugs erfolgen. Insbesondere ermöglicht es die Erfindung, auch ein diagonales Anheben des Fahrzeugs sicher zu detektieren (vgl. Fig. 3 und 4).

Es ist bevorzugt, wenn der genannte Ebenenneigungswinkel lediglich mit einem einzigen Schwellenwert verglichen wird, so dass letztlich nur ein einziger Schwellenwertvergleich durchgeführt werden muss. Dies erhöht aufgrund der geringeren Komplexität des erforderlichen Winkelvergleichs die Detektionssicherheit noch weiter. Die Gefahr von Rechenfehlern oder von Fehlern in der Synchronisation oder Zeitzählung wird hierdurch verringert. Außerdem ist, wenn nur ein einziger Schwellenwertvergleich durchgeführt wird, weniger Prozessorzeit erforderlich, was zu einer vorteilhaften Verringerung des Energieverbrauchs führt.

Es ist möglich, dass die genannte vorbestimmte Fahrzeugebene - bezogen auf den Normalzustand des Fahrzeuges - einer horizontalen Ebene oder einer bezüglich der Horizontalen geneigten Ebene entspricht. In beiden Fällen ist es wichtig, dass die genannte Fahrzeugebene fest definiert ist, so dass sie eine gleichbleibende Referenz für die erwünschte Detektion einer Änderung des Ebenenneigungswinkels bildet.

Ferner ist es bevorzugt, wenn - durch entsprechende Ausbildung der Neigungsmesseinrichtung - der Ebenenneigungswinkel aus zwei Achsenneigungswinkeln des Fahrzeugs berechnet wird. Mit anderen Worten können zwei auf eine jeweilige Referenzachse des Fahrzeugs bezogene Achsenneigungswinkel gemessen werden, wobei diese Winkelmesswerte rechnerisch zu dem genannten Ebenenneigungswinkel verknüpft werden. In diesem Fall können für die Ermittlung des Ebenenneigungswinkels übliche Neigungswinkelsensoren, insbesondere statische Beschleunigungssensoren, eingesetzt werden.

Ein weiterer Vorteil dieser bevorzugten Ausführungsform besteht darin, dass diese Achsenneigungswinkel, aus denen der Ebenenneigungswinkel berechnet wird, auf Referenzachsen oder Referenzrichtungen des Fahrzeugs bezogen sein können, die eine beliebige (jedoch feste) Ausrichtung bezüglich der Geradeaus-Fahrtrichtung des Fahrzeugs besitzen. Beispielsweise kann eine erste Referenzachse nach schräg vorne und eine zweite Referenzachse nach schräg hinten weisen.

Somit kann der Einbau der Diebstahlalarmeinrichtung in das Fahrzeug, und insbesondere der Einbau der zugehörigen Neigungsmesseinrichtung, in vorteilhafter Weise mit besonders hoher Flexibilität erfolgen. Da nämlich letztlich der Ebenenneigungswinkel mit einem Schwellenwert verglichen wird, ist die Ausrichtung der betrachteten Referenzachsen relativ zu der Geradeaus-Fahrtrichtung des Fahrzeugs unerheblich. Im Gegensatz hierzu erfordert der bekannte separate Vergleich von zwei Achsenneigungswinkeln mit jeweils einem zugeordneten Schwellenwert, dass die hierbei betrachteten Referenzachsen bezüglich der Geradeaus-Fahrtrichtung des Fahrzeugs ausgerichtet sind, und zwar parallel bzw. senkrecht hierzu.

Im Übrigen ist es bei der Erfindung nicht erforderlich, dass die beiden Referenzachsen, bezüglich derer die Achsenneigungswinkel bestimmt werden, aus welchen der Ebenenneigungswinkel berechnet wird, unbedingt senkrecht zueinander verlaufen. Vielmehr können diese Referenzachsen einen beliebigen von Null verschiedenen Winkel zueinander einnehmen.

Außerdem ist es bevorzugt, wenn der auf eine vorbestimmte Fahrzeugebene bezogene Ebenenneigungswinkel und/oder die auf vorbestimmte Referenzachsen bezogenen Achsenneigungswinkel des Fahrzeugs mittels geeigneter Neigungswinkelsensoren relativ zur Erdanziehung, also relativ zur Vertikalen ermittelt werden.

Weitere Ausführungsformen der Erfindung sind in den Unteransprüchen genannt. Die Erfindung wird nachfolgend beispielhaft unter Bezugnahme auf die Zeichnungen erläutert; in diesen zeigen:
- Fig. 1: einen schematischen Aufbau einer erfindungsgemäßen Diebstahlalarmeinrichtung,
- Fig. 2: ein vereinfachtes Flussdiagramm des erfindungsgemäßen Detektionsverfahrens,
- Fig. 3: in einer Perspektivansicht ein diagonales Anheben eines Fahrzeugs, und
- Fig. 4: in einer Perspektivansicht ein Anheben eines Fahrzeugs bezüglich einer Querrichtung.

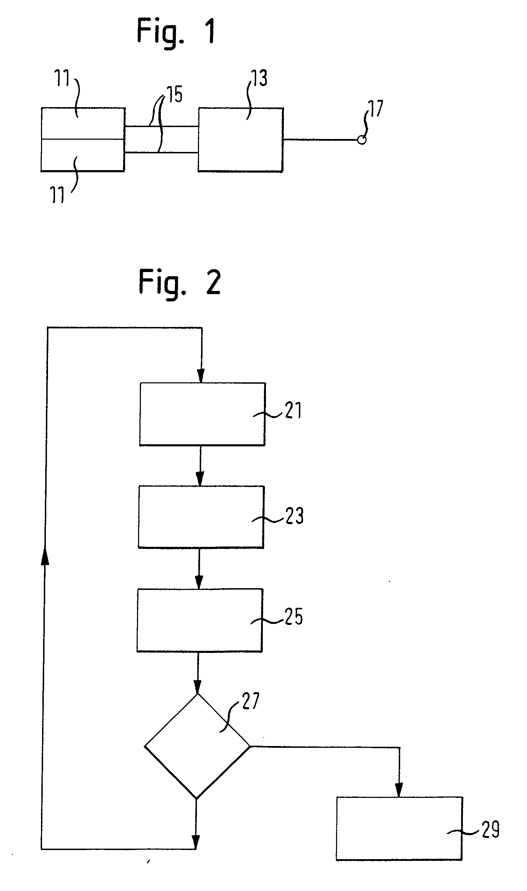

Fig. 1 zeigt schematisch eine erfindungsgemäße Diebstahlalarmeinrichtung. Diese besitzt - innerhalb eines einzigen Bauelements - zwei Neigungswinkelsensoren 11. Die beiden Neigungswinkelsensoren 11 ermöglichen die Messung eines ersten und zweiten Achsenneigungswinkels eines Fahrzeugs zwischen der Erdanziehung einerseits und einer vorbestimmten ersten bzw. zweiten Referenzachse andererseits, wobei die beiden Referenzachsen voneinander verschieden sind, um unterschiedliche Neigungswinkelinformationen ermitteln zu können.

Die beiden Neigungswinkelsensoren 11 können gemeinsam beispielsweise durch den statischen Zwei-Achsen-Beschleunigungssensor "ADXL 202" der Analog Devices Inc. (USA) gebildet sein. Hierbei handelt es sich um ein mikroelektromechanisches Bauelement, das zwei Ausgangssignale liefert, deren jeweiliges Pulsweitenverhältnis von der Ausrichtung des Bauelements relativ zu der Erdanziehungskraft abhängt (Prinzip der Pulsweitenmodulation, PWM).

Ferner weist die in Fig. 1 gezeigte Diebstahlalarmeinrichtung einen Mikroprozessor 13 auf. Dieser ist mit den Neigungswinkelsensoren 11 über zwei Verbindungsleitungen 15 verbunden, mittels derer die pulsweitenmodulierten Ausgangssignale der Neigungswinkelsensoren 11 an den Mikroprozessor 13 übermittelt werden können. Ferner besitzt der Mikroprozessor 13 einen Ausgang 17, an den gegebenenfalls ein Überschreitungssignal ausgegeben wird.

Der Mikroprozessor 13 bildet gemeinsam mit den Neigungswinkelsensoren 11 eine Neigungsmesseinrichtung, durch die die beiden auf die erste bzw. zweite Referenzachse bezogenen Achsenneigungswinkel gemessen und - innerhalb des Mikroprozessors 13 - zu einem Ebenenneigungswinkel verrechnet werden können. Der somit berechnete Ebenenneigungswinkel bezieht sich auf diejenige Fahrzeugebene, die durch die beiden genannten Referenzachsen aufgespannt wird.

Ferner bildet der Mikroprozessor 13 eine Vergleichseinrichtung, durch die der somit berechnete Ebenenneigungswinkel mit einem vorbestimmten Schwellenwert verglichen werden kann, um im Falle eines Überschreitens dieses Schwellenwerts ein Überschreitungssignal an den Ausgang 17 auszugeben, das als Alarmsignal oder zum Auslösen eines weiteren Diebstahlalarms dient.

Fig. 2 zeigt schematisch die Arbeitsweise der Diebstahlalarmeinrichtung gemäß Fig. 1. In einem ersten Schritt 21 wird mittels des einen Neigungswinkelsensors 11 der erste Achsenneigungswinkel des Fahrzeugs ermittelt. In einem weiteren Verfahrensschritt 13 wird mittels des anderen Neigungswinkelsensors 11 der zweite Achsenneigungswinkel des Fahrzeugs gemessen.

In einem nachfolgenden Schritt 25 berechnet der Mikroprozessor 13 aus diesen beiden Messwerten der Achsenneigungswinkel den Ebenenneigungswinkel des Fahrzeugs, also denjenigen Winkel, den die von den beiden vorbestimmten Referenzachsen definierte Fahrzeugebene relativ zur Vertikalen oder zur Horizontalen einnimmt.

In einem nachfolgenden Schritt 27 überprüft der Mikroprozessor 13, ob dieser berechnete Wert des Ebenenneigungswinkels einen vorbestimmten Schwellenwert überschreitet. Falls dies der Fall ist, wird in einem Schritt 29 das Überschreitungssignal an den Ausgang 17 ausgegeben. Andernfalls werden die erläuterten Schritte wiederholt, d.h. beginnend mit dem Schritt 21 werden erneut die aktuellen Achsenneigungswinkel bestimmt und ausgewertet.

Fig. 3 illustriert die Fähigkeit der erfindungsgemäßen Diebstahlalarmeinrichtung und des erfindungsgemäßen Verfahrens, auch ein diagonales Anheben eines Fahrzeugs besonders zuverlässig zu erkennen. Zum Zwecke der besseren Verständlichkeit ist die gezeigte Situation übertrieben dargestellt. Fig. 3 zeigt ein Fahrzeug 31 mit einer vorderen rechten Ecke 33, einer vorderen linken Ecke 35, einer hinteren linken Ecke 37 und einer hinteren rechten Ecke 39.

Das Fahrzeug 31 ist an seiner vorderen rechten Ecke 33 um einen Hub 43 angehoben, so dass auch die vordere linke Ecke 35 um einen Hub 45 und die hintere rechte Ecke 39 um einen Hub 49 nach oben ragt. Die - im Normalzustand des Fahrzeugs 31 horizontale - Unterseite 51 des Fahrzeugs 31 nimmt somit bezüglich einer horizontalen Geradeaus-Fahrtrichtung 53 einen ersten Achsenneigungswinkel 55, und bezüglich einer horizontalen Querrichtung 57, die senkrecht zur Geradeaus-Fahrtrichtung 53 verläuft, einen zweiten Achsenneigungswinkel 59 ein. Die Unterseite 51 des Fahrzeugs 31 ist somit bezüglich der Horizontalen 61 um einen Ebenenneigungswinkel 63 geneigt.

Das in Fig. 3 gezeigte diagonale Anheben des Fahrzeugs 31, das beispielsweise unerlaubt zum Zwecke des Entfernens des vorderen rechten Rads erfolgen könnte, kann mittels der erfindungsgemäßen Diebstahlalarmeinrichtung und des erfindungsgemäßen Detektionsverfahrens zuverlässig erkannt werden, indem der Ebenenneigungswinkel 63 aus den gemessenen Achsenneigungswinkeln 55 und 59 berechnet und mit einem vorbestimmten Schwellenwert verglichen wird.

Dem gegenüber kann ein Detektionsverfahren, bei dem die beiden Achsenneigungswinkel 55 und 59 jeweils separat mit einem zugehörigen Schwellenwert verglichen werden, nicht die gleiche Detektionssicherheit gewährleisten. Aufgrund des diagonalen Anhebens des Fahrzeugs 31 ist der jeweilige Hub 45, 49 an der vorderen linken Ecke 35 bzw. der hinteren rechten Ecke 39 nämlich vergleichsweise gering, und demzufolge sind auch der erste Achsenneigungswinkel 55 und der zweite Achsenneigungswinkel 59 vergleichsweise gering. Die beiden Achsenneigungswinkel 55, 59 liegen somit für sich möglicherweise jeweils unterhalb des betreffenden Schwellenwerts. Indem erfindungsgemäß der resultierende Ebenenneigungswinkel 63 mit einem Schwellenwert verglichen wird, wird dieser Mangel behoben.

Zu Fig. 3 ist noch anzumerken, dass im Rahmen der Erfindung die Referenzachsen, bezüglich derer die Achsenneigungswinkel 55, 59 bestimmt werden, zugunsten eines flexiblen Einbaus der entsprechenden Neigungswinkelsensoren 11 auch in einer beliebigen anderen Ausrichtung bezüglich der Geradeaus-Fahrtrichtung 53 des Fahrzeugs angeordnet sein können.

Außerdem ist anzumerken, dass die Messung der Achsenneigungswinkel 55, 59 - anstelle, wie gezeigt, relativ zur Horizontalen - auch relativ zur Vertikalen erfolgen kann.

Fig. 4 zeigt schließlich in einer der Ansicht gemäß Fig. 3 entsprechenden Darstellung das Fahrzeug 31 in einem Zustand, in dem es an den beiden vorderen Ecken 33, 35 gleichermaßen angehoben und somit um die Hinterachse gekippt ist. Bei diesem gleichmäßigen Anheben des Fahrzeugs 31 an seiner Vorderseite ist der Hub 45 an der vorderen linken Ecke 35 größer als bei dem diagonalen Anheben des Fahrzeugs 31 gemäß Fig. 3. Dementsprechend wird bei dem in Fig. 4 dargestellten Beispiel ein größerer erster Achsenneigungswinkel 55 registriert. Somit kann dieses gleichmäßige Anheben des Fahrzeugs 31 auch durch den bekannten separaten Schwellenwertvergleich der beiden Achsenneigungswinkel 55, 59 detektiert werden.

Selbstverständlich wird das in Fig. 4 gezeigte Anheben des Fahrzeugs 31 jedoch auch mittels des erfindungsgemäßen Verfahrens bzw. der erfindungsgemäßen Einrichtung zuverlässig erkannt, da der in Fig. 4 gezeigte erste Achsenneigungswinkel 55 gleichzeitig dem mit einem einzigen Schwellenwert zu vergleichenden Ebenenneigungswinkel 63 entspricht.

### Bezugszeichenliste

- 11: Neigungswinkelsensor
- 13: Mikroprozessor
- 15: Verbindungsleitung
- 17: Ausgang des Mikroprozessors
- 21: Verfahrensschritt
- 23: Verfahrensschritt
- 25: Verfahrensschritt
- 27: Verfahrensschritt
- 29: Verfahrensschritt
- 31: Fahrzeug
- 33: vordere rechte Ecke
- 35: vordere linke Ecke
- 37: hintere linke Ecke
- 39: hintere rechte Ecke
- 43: Hub
- 45: Hub
- 49: Hub
- 51: Unterseite des Fahrzeugs
- 53: Geradeaus-Fahrtrichtung
- 55: erster Achsenneigungswinkel
- 57: Querrichtung
- 59: zweiter Achsenneigungswinkel
- 61: Horizontale
- 63: Ebenenneigungswinkel

## Patentansprüche

1. Verfahren zur Detektion eines unerlaubten Anhebens eines Kraftfahrzeugs (31), bei dem
- wenigstens ein Neigungswinkel (63) des Fahrzeugs (31) ermittelt wird (21, 23, 25) und
- der ermittelte Neigungswinkel (63) mit einem Schwellenwert verglichen wird (27), um bei einem Überschreiten des Schwellenwerts ein Überschreitungssignal auszulösen (29),
**dadurch gekennzeichnet,**
**dass** ein auf eine vorbestimmte Fahrzeugebene (51) bezogener Ebenenneigungswinkel (63) des Fahrzeugs (31) ermittelt wird (21, 23, 25), und
**dass** der Ebenenneigungswinkel (63) mit dem Schwellenwert verglichen wird (27).

2. Verfahren nach Anspruch 1,
**dadurch gekennzeichnet,**
**dass** der Ebenenneigungswinkel (63) mit einem einzigen Schwellenwert verglichen wird (27).

3. Verfahren nach einem der vorhergehenden Ansprüche,
**dadurch gekennzeichnet,**
**dass** die vorbestimmte Fahrzeugebene (51) im Ruhezustand des Fahrzeuges einer horizontalen Ebene oder einer bezüglich der Horizontalen geneigten Ebene entspricht.

4. Verfahren nach einem der vorhergehenden Ansprüche,
**dadurch gekennzeichnet,**
**dass** der Ebenenneigungswinkel (63) aus wenigstens zwei Achsenneigungswinkeln (55, 59) des Fahrzeugs berechnet wird (25).

5. Verfahren nach einem der vorhergehenden Ansprüche,
**dadurch gekennzeichnet,**
**dass** der Ebenenneigungswinkel (63) ermittelt wird, indem
- ein erster Achsenneigungswinkel (55) des Fahrzeugs (31) bezüglich einer vorbestimmten ersten Referenzachse (53) und ein zweiter Achsenneigungswinkel (59) des Fahrzeugs (31) bezüglich einer vorbestimmten zweiten Referenzachse (57) ermittelt werden (21, 23), und
- der Ebenenneigungswinkel (63) aus dem ersten und dem zweiten Achsenneigungswinkel (55, 59) berechnet wird (25).

6. Verfahren nach Anspruch 5,
**dadurch gekennzeichnet,**
**dass** die vorbestimmte erste Referenzachse (53) und die vorbestimmte zweite Referenzachse (57) bezüglich der Geradeaus-Fahrtrichtung (53) des Fahrzeugs eine beliebige Ausrichtung besitzen.

7. Verfahren nach einem der Ansprüche 5 und 6,
**dadurch gekennzeichnet,**
**dass** die vorbestimmte erste Referenzachse (53) und die vorbestimmte zweite Referenzachse (57) einen von Null verschiedenen Winkel, vorzugsweise einen Winkel von 90° zueinander einnehmen.

8. Verfahren nach einem der Ansprüche 4 bis 7,
**dadurch gekennzeichnet,**
**dass** die Achsenneigungswinkel (55, 59) mittels eines jeweils zugeordneten Beschleunigungssensors (11) ermittelt werden (21, 23).

9. Verfahren nach einem der vorhergehenden Ansprüche,
**dadurch gekennzeichnet,**
**dass** der Ebenenneigungswinkel (63) des Fahrzeugs und/oder die Achsenneigungswinkel (55, 59) des Fahrzeugs relativ zur Erdanziehung ermittelt werden (21, 23, 25).

10. Diebstahlalarmeinrichtung zur Detektion eines unerlaubten Anhebens eines Kraftfahrzeugs (31), insbesondere gemäß einem Verfahren nach einem der vorhergehenden Ansprüche, wenigstens mit
- einer Neigungsmesseinrichtung (11, 13) zum Ermitteln eines Neigungswinkels (63) des Fahrzeugs (31) und
- einer Vergleichseinrichtung (13) zum Vergleichen des ermittelten Neigungswinkels (63) mit einem Schwellenwert, um bei einem Überschreiten des Schwellenwerts ein Überschreitungssignal auszulösen,
**dadurch gekennzeichnet,**
**dass** durch die Neigungsmesseinrichtung (11, 13) ein auf eine vorbestimmte Fahrzeugebene (51) bezogener Ebenenneigungswinkel (63) des Fahrzeugs (31) ermittelbar ist, und
**dass** die Vergleichseinrichtung (13) zum Vergleichen des Ebenenneigungswinkels (63) mit dem Schwellenwert ausgebildet ist.

11. Diebstahlalarmeinrichtung nach Anspruch 10,
**dadurch gekennzeichnet;**
**dass** die Vergleichseinrichtung (13) zum Vergleichen des Ebenenneigungswinkels (63) mit einem einzigen Schwellenwert ausgebildet ist.

12. Diebstahlalarmeinrichtung nach einem der Ansprüche 10 und 11,
**dadurch gekennzeichnet,**
**dass** die vorbestimmte Fahrzeugebene (51) im Ruhezustand des Fahrzeuges (31) einer horizontalen Ebene oder einer bezüglich der Horizontalen geneigten Ebene entspricht.

13. Diebstahlalarmeinrichtung nach einem der Ansprüche 10 bis 12,
**dadurch gekennzeichnet,**
**dass** der Ebenenneigungswinkel (63) durch die Neigungsmesseinrichtung (13) aus wenigstens zwei Achsenneigungswinkeln (55, 59) des Fahrzeugs (31) berechenbar ist.

14. Diebstahlalarmeinrichtung nach einem der Ansprüche 10 bis 13,
**dadurch gekennzeichnet,**
**dass** die Neigungsmesseinrichtung (11, 13) dergestalt ausgebildet ist, dass
- ein erster Achsenneigungswinkel (55) des Fahrzeugs (31) bezüglich einer vorbestimmten ersten Referenzachse (53) und ein zweiter Achsenneigungswinkel (59) des Fahrzeugs (31) bezüglich einer vorbestimmten zweiten Referenzachse (57) ermittelbar sind, und
- der Ebenenneigungswinkel (63) aus dem ersten und dem zweiten Achsenneigungswinkel (55, 59) berechenbar ist.

15. Diebstahlalarmeinrichtung nach Anspruch 14,
**dadurch gekennzeichnet;**
**dass** die vorbestimmte erste Referenzachse (53) und die vorbestimmte zweite Referenzachse (57) bezüglich der Geradeaus-Fahrtrichtung (53) des Fahrzeugs eine beliebige Ausrichtung besitzen.

16. Diebstahlalarmeinrichtung nach einem der Ansprüche 14 und 15,
**dadurch gekennzeichnet,**
**dass** die vorbestimmte erste Referenzachse (53) und die vorbestimmte zweite Referenzachse (57) einen von Null verschiedenen Winkel, vorzugsweise einen Winkel von 90° zueinander einnehmen.

17. Diebstahlalarmeinrichtung nach einem der Ansprüche 13 bis 16,
**dadurch gekennzeichnet,**
**dass** die Neigungsmesseinrichtung zur Ermittlung der Achsenneigungswinkel (55, 59) einen jeweils zugeordneten Beschleunigungssensor (11) aufweist.

18. Diebstahlalarmeinrichtung nach einem der Ansprüche 10 bis 17,
**dadurch gekennzeichnet,**
**dass** der Ebenenneigungswinkel (63) des Fahrzeugs und/oder die Achsenneigungswinkel (55, 59) des Fahrzeugs relativ zur Erdanziehung ermittelbar sind.
